# EUROPEAN PATENT APPLICATION

(11) **EP 4 734 163 A1**
(43) Date of publication of application: **29.04.2026**
(21) Application number: 25790691.7
(22) Date of filing: 18.04.2025
(51) Int. Cl.: H01M 4/04, G01N 21/94, F26B 13/12, G08B 21/18, H01M 4/139, G01N 21/84

(54) **MANUFACTURING APPARATUS FOR ELECTRODE SUBSTRATE AND MANUFACTURING METHOD FOR ELECTRODE SUBSTRATE**

(30) Priority: 18.04.2024 KR 20240051959
(71) Applicant: LG Energy Solution, Ltd., Seoul 07335 (KR)
(72) Inventor: KIM, Dong Beom, Daejeon 34122 (KR)
(74) Representative: Goddar, Heinz J.
(86) International application number: PCT/KR2025/005269
(87) International publication number: WO 2025/221066

(57) **Abstract**

An electrode base material manufacturing facility related to one example of the present invention may comprise a conveying part including a conveying roll arranged so that light is transmitted into an internal space through a surface, and arranged to guide traveling of an electrode base material penetrating a drying part, an illuminance sensor mounted in the internal space of the conveying roll and arranged to sense illuminance of light transmitted into the internal space, and a control part arranged to inspect a contamination level of the conveying roll based on the illuminance information of the illuminance sensor and to stop the conveying part if the contamination level corresponds to a preset stop contamination level.

## Description

### Technical Field

The present invention relates to an electrode base material manufacturing facility and an electrode base material manufacturing method, and more specifically, relates to an electrode base material manufacturing facility and an electrode base material manufacturing method, capable of inspecting a contamination level of a conveying roll in real time through changes in illuminance transmitting a conveying roll which guides traveling of an electrode base material penetrating a drying part.

In addition, this application claims the benefit of priority based on Korean Patent Application No. 10-2024-0051959 dated April 18, 2024, the disclosure of which is incorporated herein by reference in its entirety.

### Background Art

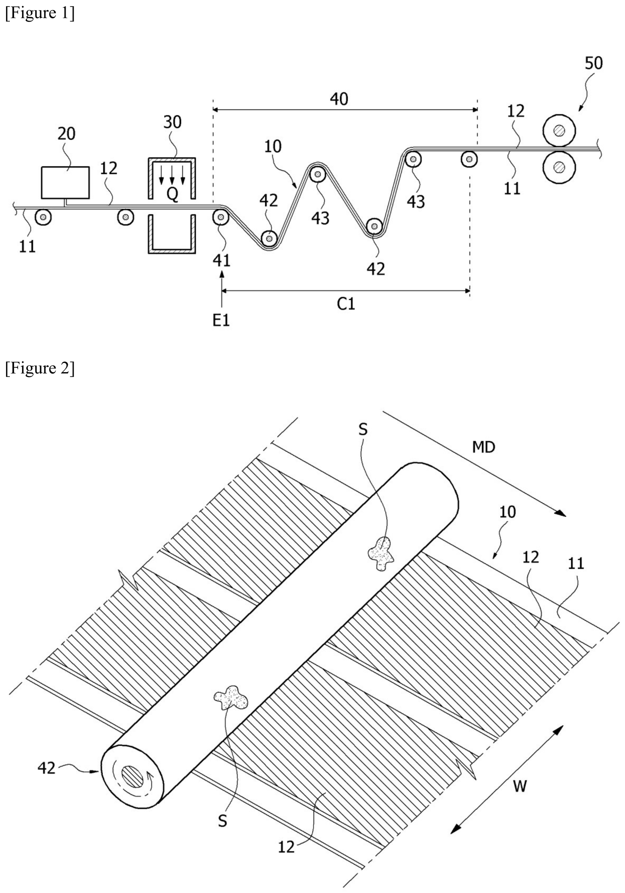

Figure 1 schematically illustrates a configuration diagram of a conventional electrode base material manufacturing facility, and Figure 2 is a diagram for schematically explaining a state where foreign substances have been attached to a conveying roll when guiding traveling of an electrode base material having a less dried coating layer.

An electrode process, which is one of secondary battery manufacturing processes, is a process of producing an electrode base material by applying and drying a slurry comprising an electrode active material to a base material.

Referring to Figure 1, the electrode base material (10) comprises the base material (11) and a coating layer (12). The coating layer (12) adheres to the base material (11) while the slurry is dried.

The slurry may be either a negative electrode slurry or a positive electrode slurry. The positive electrode slurry is a mixture of electrode materials such as a positive electrode active material (e.g., lithium cobalt oxide), a conductive additive (e.g., carbon black), and a binder (e.g., PVDF). The negative electrode slurry is a mixture of electrode materials such as a negative electrode active material (e.g., graphite), a binder, and a conductive additive.

The electrode manufacturing facility comprises a coating part (20) applying the slurry to the base material (11), a drying part (30) drying the base material (11) to which the slurry has been applied, and a rolling part (50) arranged to roll the electrode base material (10).

The coating part (20), the drying part (30), and the rolling part (50) are disposed sequentially along a traveling route of the base material (11). A rewinder (41) is disposed at the rear end of the drying part (30).

The base material (11) to which the slurry has been applied is dried while penetrating the drying part (30). The electrode base material (10) penetrating the drying part (30) travels to the rolling part (50) via the rewinder (41) and a plurality of conveying rolls (42, 43) installed in a conveying section of a conveying part (40).

The conveying section of the conveying part (40) is several hundred meters. The plurality of conveying rolls (42, 43) is disposed to be spaced apart in the conveying section to guide the traveling of the electrode base material (10) from the drying part (30) to the rolling section (50). The conveying rolls (42, 43) are disposed parallel to the width direction (W) of the electrode base material (10). The conveying rolls (42, 43) push the electrode base material (10) in a moving direction (MD).

The electrode base material (10) penetrating the drying part (30) can be cooled to room temperature while traveling through the conveying section of several hundred meters. However, when the coating layer (12) of the electrode base material (10) penetrating the drying part (30) is less dried, the less dried slurry of the coating layer (12) is attached to the surface of the conveying roll (42) and hardens, thereby becoming a foreign substance (S).

The coating layer (12) of the electrode base material (10) can be damaged due to foreign substances (S) of the conveying roll (42). Damage to the coating layer (12) of the electrode base material (10) can cause poor quality of the secondary battery.

Conventionally, to prevent poor quality of the electrode base material (10) of the coating layer (12), the drying state of the electrode base material (10) penetrating the drying part (30) and the foreign substances (S) attached to the conveying rolls (42, 43) were visually checked.

A worker visually inspected (E1) the drying state of the coating layer (12) of the electrode base material (10) via the rewinder (41) at the rear end of the drying part (30). As a result of the visual inspection, if the worker determined that the coating layer (12) was not dried, the worker stopped operation of the conveying part (40) and the drying part (30).

In addition, the worker performs total inspection in which the conveying rolls (42, 43) for foreign substances (S) are checked visually in the conveying section of several hundred meters. The foreign substances (S) can be mainly found in the conveying roll (42) of a contact zone (C1). The contact zone (C1) is one point of the conveying section where the conveying roll (42) is in contact with the coating layer (12) of the electrode base material (10) to guide the traveling of the electrode base material (10). When the electrode base material (10) travels the conveying roll (42) installed in the contact zone (C1), the coating layer (12) is in contact with the surface of the conveying roll (42), and when the coating layer (12) of the electrode base material (10) is less dried, the less dried slurry of the coating layer (12) is attached to the surface of the conveying roll (42) and hardens, thereby becoming the foreign substances (S).

When the worker found foreign substances in the conveying rolls (42, 43), the worker stopped the conveying part (40). The later the worker finds foreign substances in the conveying rolls (42, 43), the more the poor quality of the electrode base material (10) continuously occurs.

In addition, as the speed of the electrode manufacturing facility gradually increases due to technological development, the wastage due to the poor quality of the electrode base material (10) can increase.

### Disclosure

### Technical Problem

The present invention has been devised to solve such problems, which is intended to provide an electrode base material manufacturing facility capable of inspecting a contamination level of conveying rolls in real time through changes in illuminance of light transmitting the conveying rolls guiding traveling of an electrode base material.

Particularly, the conveying roll guides traveling of an electrode base material penetrating a drying part, where it is intended to provide an electrode base material manufacturing facility capable of inspecting a contamination level of the conveying roll in real time through changes in illuminance of light transmitted to the inside of the conveying roll.

Also, if the contamination level of the conveying rolls corresponds to a stop contamination level, it is intended to provide an electrode base material manufacturing facility and an electrode base material manufacturing method, capable of automatically stopping a conveying part including the conveying rolls.

In addition, if the contamination level of the conveying rolls corresponds to a stop contamination level, it is intended to provide an electrode base material manufacturing facility and an electrode base material manufacturing method, capable of automatically stopping a drying part and resetting drying conditions of the drying part based on the contamination level of the conveying rolls.

Furthermore, if the contamination level of the conveying rolls corresponds to a cleaning contamination level, it is intended to provide an electrode base material manufacturing facility and an electrode base material manufacturing method, capable of providing a cleaning alarm.

### Technical Solution

To achieve the objects, the electrode base material manufacturing facility and the electrode base material manufacturing method may be configured as follows.

The electrode base material manufacturing facility may comprise a conveying part including a conveying roll arranged so that light is transmitted into an internal space through a surface, and arranged to guide traveling of an electrode base material penetrating a drying part, an illuminance sensor mounted in the internal space of the conveying roll and arranged to sense illuminance of light transmitted into the internal space, and a control part arranged to inspect a contamination level of the conveying roll based on the illuminance information of the illuminance sensor and to stop the conveying part if the contamination level corresponds to a preset stop contamination level.

The conveying roll may comprise a roll body having a plurality of holes into which light is transmitted and a roll axis arranged to be rotatable together with the roll body.

The illuminance sensor may be mounted on the outer surface of the roll axis to face the holes in the internal space of the roll body.

The holes may be arranged in the entire region of the roll body.

The illuminance sensor may be mounted on the roll axis to face the entire region where the holes are arranged, and may sense illuminance according to a change in the roll width of the conveying roll in the entire region of the roll body.

The holes may be arranged in a partial region of the roll body along the width direction of the conveying roll.

The illuminance sensor may be mounted on the roll axis to face the partial region where the holes are arranged, and may sense illuminance according to a change in the roll width of the conveying roll in a partial region of the roll body.

The conveying part may comprise a plurality of conveying rolls spaced apart along the moving direction of the electrode base material, and some of the conveying rolls may be installed in a plurality of contact areas, respectively, in contact with the coating layer of the electrode base material.

The electrode base material manufacturing facility may further comprise an illumination arranged to irradiate the conveying roll with light in the conveying section of the conveying part.

The electrode base material manufacturing facility may comprise a monitoring part where an illuminance graph generated based on the acquired illuminance information is displayed.

Also, the electrode base material manufacturing facility may comprise a monitoring part where an illuminance graph generated based on the acquired illuminance information for each conveying roll is displayed.

In addition, the illuminance graph may comprise at least one of an illuminance graph according to a change in time and an illuminance graph according to a change in roll width.

The control part may acquire a first illuminance value and a second illuminance value lower than the first illuminance value from the illuminance graph generated based on the illuminance information, and may inspect a contamination level of the conveying roll through an illuminance ratio of the second illuminance value to the first illuminance value.

The first illuminance value may be an illuminance value measured in a state where all the plurality of holes arranged on the surface of the conveying roll are opened, and the second illuminance value may be an illuminance value measured in a state where some of or all the holes are blocked by foreign substances.

The control part may provide the monitoring part with a cleaning alarm if the illuminance ratio corresponds to a cleaning contamination level in a range of 0.5 to 0.8.

It may be characterized in that the control part stops the conveying part if the illuminance ratio corresponds to a stop contamination level of less than 0.5.

The control part may provide a monitoring part with a stop alarm if the illuminance ratio corresponds to a stop contamination level of less than 0.5.

The control part may determine that the coating layer of the electrode base material is poorly dried if the illuminance ratio corresponds to a stop contamination level of less than 0.5, stop the drying part, and reset drying conditions of the drying part.

The control part may calculate contamination locations of the conveying roll through the illuminance graph according to the change in the roll width of the conveying roll.

The control part may calculate a contamination area of the conveying roll through the illuminance graph.

Meanwhile, the electrode base material manufacturing method may comprise a traveling step in which an electrode base material penetrating a drying part is traveled toward a rolling part along a conveying roll of a conveying part, and an inspection step in which a contamination level of the conveying roll is inspected based on illuminance information acquired through an illuminance sensor built into the conveying roll in the traveling step.

The inspection step may comprise an illuminance ratio calculation step of acquiring a first illuminance value and a second illuminance value lower than the first illuminance value from an illuminance graph generated based on the illuminance information, and calculating an illuminance ratio of the second illuminance value to the first illuminance value.

The inspection step may comprise a first alarm step of providing a cleaning alarm if the illuminance ratio corresponds to a cleaning contamination level in a range of 0.5 to 0.8.

The inspection step may comprise a second alarm step of providing a stop alarm if the illuminance ratio corresponds to a stop contamination level of less than 0.5.

The inspection step may comprise a traveling stop step of stopping a conveying part if the illuminance ratio corresponds to a stop contamination level of less than 0.5.

In the traveling stop step, the drying part may be stopped and drying conditions of the drying part may be reset.

### Advantageous Effects

The electrode base material manufacturing facility having such constitutions and structures, and the electrode base material manufacturing method have the following effects.

By measuring an illuminance value transmitting a conveying roll in real time through an illuminance sensor built into the conveying roll guiding traveling of an electrode base material penetrating a drying part, it is possible to inspect a contamination level of the conveying roll.

Also, if the contamination level of the conveying roll corresponds to a stop contamination level, a conveying part comprising the conveying roll is automatically stopped, whereby it is possible to reduce wastage of the electrode base material damaged due to the contamination of the conveying roll.

In addition, if the contamination level of the conveying roll corresponds to a stop contamination level, a drying part is automatically stopped, and drying conditions of the drying part are reset based on the contamination level of the conveying roll, whereby it is possible to improve a facility operation efficiency.

Furthermore, if the contamination level of the conveying roll corresponds to a cleaning contamination level, it is possible to provide a cleaning alarm. A facility manager cleans the conveying roll at an optimal time point through the cleaning alarm, whereby it is possible to improve a facility operation efficiency.

### Description of Drawings

Figure 1 schematically illustrates a configuration diagram of a conventional electrode base material manufacturing facility.
Figure 2 is a diagram for schematically explaining a state where foreign substances are attached to a conveying roll when guiding traveling of an electrode base material having a less dried coating layer.
Figure 3 is a diagram for explaining a configuration diagram of an electrode base material manufacturing facility according to one example of the present invention and a traveling route of an electrode base material.
Figure 4 is a perspective diagram of a conveying roll according to one example of the present invention.
Figure 5(a) is a cross-sectional diagram of a conveying roll according to one example, and Figure 5(b) is a cross-sectional diagram of a conveying roll according to another example.
Figure 6 is an operating state diagram in which a conveying roll according to one example of the present invention guides traveling of the electrode base material in a contact area of a conveying section.
Figure 7 is diagrams for explaining an illuminance graph measured in a conveying roll without any foreign substance in one example of the present invention, and Figure 8 is diagrams for explaining an illuminance graph measured in a conveying roll with foreign substances.
Figures 9 and 10 schematically illustrate flow charts of an electrode base material manufacturing method according to one example of the present invention.

### Mode for Invention

Hereinafter, with reference to the attached drawings, an electrode base material manufacturing facility and an electrode base material manufacturing method, according to one example of the present invention, will be described.

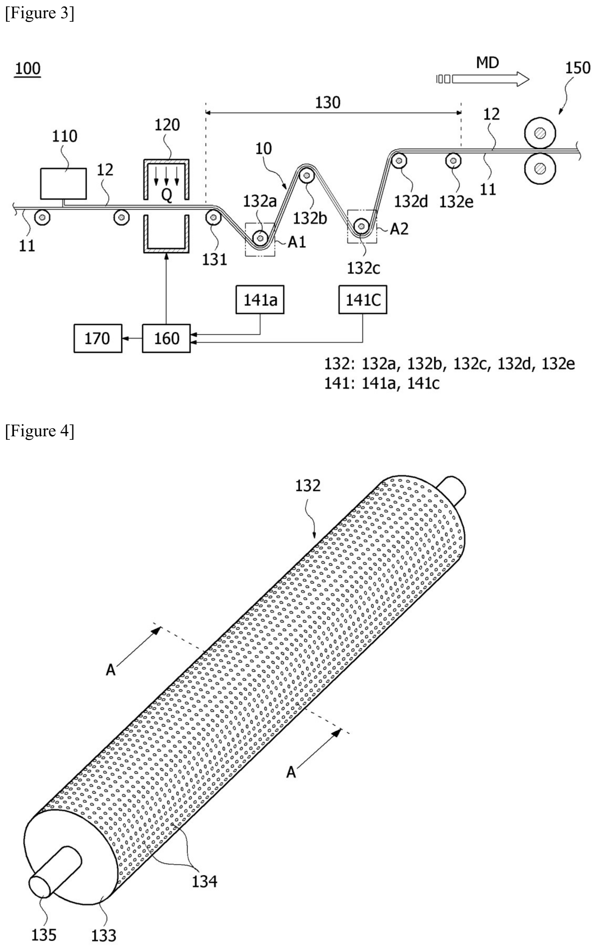

Figure 3 is a diagram for explaining a configuration diagram of an electrode base material manufacturing facility according to one example of the present invention and a traveling route of an electrode base material, and Figure 4 is a perspective diagram of a conveying roll according to one example of the present invention.

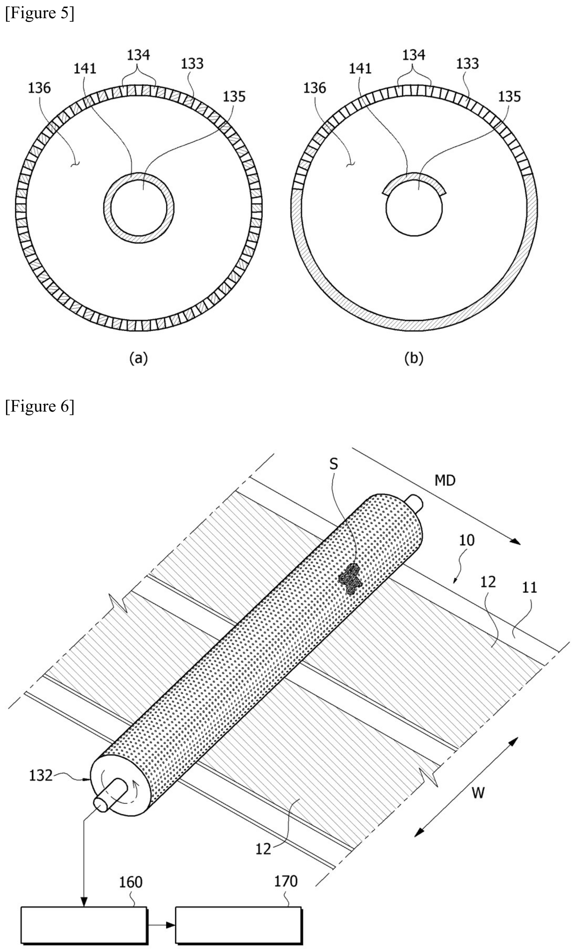

In addition, Figure 5(a) is a cross-sectional diagram of a conveying roll according to one example, and Figure 5(b) is a cross-sectional diagram of a conveying roll according to another example.

Referring to Figures 3 and 4, the electrode base material manufacturing facility (100) comprises a conveying roll (132) arranged so that light is transmitted into an internal space (136) through a surface, and comprises a conveying part (130) arranged to guide traveling of an electrode base material (10) penetrating a drying part (120).

Also, the electrode base material manufacturing facility (100) comprises an illuminance sensor (141) mounted in the internal space (136) of the conveying roll (132) and arranged to sense illuminance transmitted into the internal space (136).

In addition, the electrode base material manufacturing facility (100) may comprise a control part (160) arranged to inspect a contamination level of the conveying roll (132) based on illuminance information of the illuminance sensor (141) and to stop the conveying part (130) if the contamination level corresponds to a preset stop contamination level.

Furthermore, the electrode base material manufacturing facility (100) may comprise a coating part (110), a drying part (120), a conveying part (130), and a rolling part (150). As one example, the coating part (110), the drying part (120), the conveying part (130), and the rolling part (150) may be connected inline, and may be in-line-connected in a roll-to-roll manner. The coating part (110), the drying part (120), the conveying part (130), and the rolling part (150) are arranged sequentially along the traveling direction (MD).

The coating part (110) is for applying a slurry to the traveling base material (11). The base material (11) may be a current collector having an aluminum material. The slurry is a material containing an electrode active material, for example, a negative electrode active material or a positive electrode active material. The slurry is applied to the base material (11) in a liquid state.

The drying part (120) provides the base material (11), to which the slurry is applied, with heat (Q). The base material (11), to which the slurry is applied, is dried while penetrating the drying part (120), thereby becoming an electrode base material (10) having a coating layer (12). The coating layer (12) is a layer in which the electrode active material contained in the slurry is attached to the base material (11) as moisture in the slurry is removed.

The electrode base material (10) may be naturally cooled while penetrating the drying part (120) and traveling the conveying section of the conveying part (130).

The conveying part (130) is arranged to guide the traveling of the electrode base material (10) having the coating layer (12) in which the slurry is dried at the rear end of the drying part (120). The conveying part (130) comprises a rewinder (131) and a plurality of conveying rolls (132).

The rewinder (131) is a device pushing the electrode base material (10) to the plurality of conveying rolls (132) at the rear end of the drying part (120). The plurality of conveying rolls (132) is a roller guiding traveling of the electrode base material (10) in the traveling direction (MD).

The conveying section of the conveying part (130) has a length of approximately several hundred meters. In order that the electrode base material (10) is traveled in a flat and tense state, the plurality of conveying rolls (132) may be disposed to be spaced apart in the conveying section with different heights.

Referring to Figures 4 and 5, the conveying roll (132) may comprise a roll body (133) having a plurality of holes (134) through which light is transmitted, and a roll axis (135) arranged to be rotatable together with the roll body (133).

The roll body (133) may be arranged to have a smooth surface as the plurality of holes (134) is micro-hole-processed. The plurality of holes (134) is an opening connecting the surface of the roll body (133) and the internal space (136) to be fluidly movable. The holes (134) may have a diameter in a unit of millimeters (mm). The holes (134) may have a diameter of 1mm to 2mm.

The holes (134) may be arranged in the entire region of the roll body (133). The holes (134) may be arranged in a partial region of the roll body (133) along the width direction (W) of the conveying roll (132).

The roll axis (135) is mounted in the roll body (133) parallel to the width direction (W) of the conveying roll (132). The roll axis (135) is mounted at the center of the roll body (133).

The illuminance sensor (141) may be mounted on the outer surface of the roll axis (135) in the internal space (136) of the roll body (133). The illuminance sensor (141) is a sensor for measuring the illuminance of light transmitted into the internal space (136) of the roll body (133) through the holes (134).

The illuminance sensor (141) may be arranged to face the plurality of holes (134) of the roll body (133). The illuminance sensor (141) may be mounted on the outer surface of the roll axis (135) along the width direction (W) of the conveying roll (132). The illuminance sensor (141) may be installed in the internal space (136) of the roll body (133) to be exposed to the holes (134) along the circumferential direction of the conveying roll (132). That is, the illuminance sensor (141) may be disposed to face the holes (134) so as to sense light incident through the holes (134).

As one example, referring to Figure 5(a), the illuminance sensor (141) may be mounted on the roll axis (135) to face the entire region where the holes (134) are arranged, and may sense illuminance according to changes in the roll width of the conveying roll (132) in the entire region of the roll body (133).

As another example, referring to Figure 5(b), the illuminance sensor (141) may be mounted on the roll axis (135) to face a partial region where the holes (134) are arranged, and may sense illuminance according to changes in the roll width of the conveying roll (132) in a partial region of the roll body (133).

Figure 6 is an operating state diagram in which a conveying roll according to one example of the present invention guides traveling of the electrode base material in a contact area of a conveying section.

The electrode base material (10) may be naturally cooled while traveling through a conveying section of several hundred meters, to dissipate heat generated while penetrating the drying part (120). However, referring to Figure 6, when the electrode base material (10) penetrating the drying part (120) is not dried enough, the electrode base material (10) may contaminate the conveying roll (132) installed in the conveying section.

Referring to Figure 3, in the conveying section, some of the plurality of conveying rolls (132) may be installed in each of the plurality of contact areas (A1, A2) contacting the coating layer (12) of the electrode base material (10). For convenience of explanation, the plurality of conveying rolls (132) may be divided into a first conveying roll (132a), a second conveying roll (132b), a third conveying roll (132c), a fourth conveying roll (132d), and a fifth conveying roll (132e) in the order disposed along the traveling direction of the electrode base material (10).

The less-dried slurry of the coating layer (12) may be mainly attached to the surface of the first conveying roll (132a) of the first contact area (A1) and the surface of the third conveying roll (132c) of the second contact area (A2).

As mentioned as the problem of the conventional electrode manufacturing facility, the foreign substances (S) fixing to the surface of the conveying roll (132) may scratch the coating layer (12) of the electrode base material (10) which is subsequently traveled. Such scratches on the coating layer (12) of the electrode base material (10) may cause electrode defects of the secondary batteries later.

Unlike the conventional electrode manufacturing facility, the electrode base material manufacturing facility (100) may monitor in real time whether the foreign substances (S) are attached to the conveying roll (132) through the conveying roll (132) having a plurality of holes (134) arranged on the surface and the illuminance sensor (141) built into the conveying roll (132).

The foreign substances (S) block some holes (134) of the plurality of holes (134) arranged on the surface of the conveying roll (132), thereby enabling to hinder the transmission of light into the internal space (136).

The first conveying roll (132a) to the fifth conveying roll (132e) are sequentially disposed to be spaced apart along the traveling direction (MD). The first conveying roll (132a) to the fifth conveying roll (132e) may each have a built-in illuminance sensor (141).

The first conveying roll (132a) and the third conveying roll (132c) are rollers in contact with the coating layer (12) during the traveling of the electrode base material (10), which have a high probability of contamination by foreign substances (S) due to the slurry when the coating layer (12) is not dried.

The first conveying roll (132a) is installed in the first contact area (A1). The first illuminance sensor (141a) is an illuminance sensor mounted on the first conveying roll (132a). The first illuminance sensor (141a) measures the illuminance of light transmitted into the internal space of the first conveying roll (132a).

The third conveying roll (132c) is installed in the second contact area (A2). The third illuminance sensor (141c) is an illuminance sensor mounted on the third conveying roll (132c). The third illuminance sensor (141c) measures the illuminance of light transmitted into the internal space of the third conveying roll (132c).

An illumination (139) arranged to irradiate the conveying roll (132) with light may be installed in the conveying section. The illumination (139) may be concentratedly installed in the first contact area (A1) and the second contact area (A2).

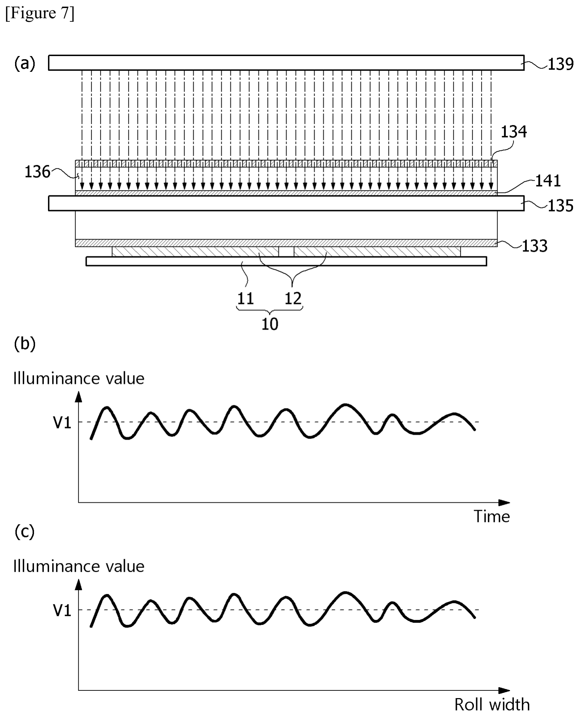

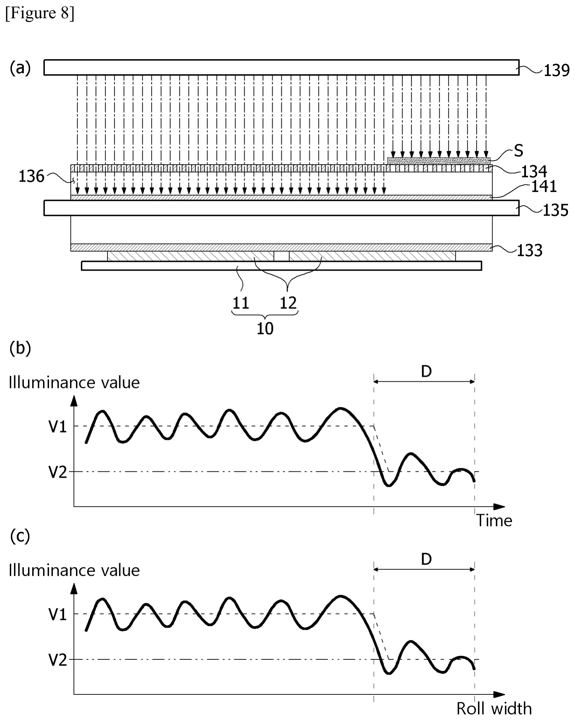

Figure 7 is diagrams for explaining an illuminance graph measured in a conveying roll without any foreign substance in one example of the present invention, and Figure 8 is diagrams for explaining an illuminance graph measured in a conveying roll with foreign substances.

Referring to Figures 7 and 8, the illuminance sensor (141) is built into the internal space (136) of the conveying roll (132), which may measure an illuminance value according to an intensity of light transmitted into the internal space (136) through the hole (134).

The illuminance varies depending on the open area of the hole (134). As the open area of the hole (134) decreases, the illuminance transmitted into the internal space (136) through the hole (134) decreases. In addition, referring to Figure 8, if the hole (134) is blocked by the foreign substances (S), light may not be transmitted into the internal space (136).

The control part (160) generates an illuminance graph based on the illuminance information of the illuminance sensor (141). The illuminance information of the illuminance sensor (141) is acquired for each conveying roll (132) mounted with the illuminance sensor (141).

The illuminance graph may comprise an illuminance graph according to changes in time and an illuminance graph according to changes in roll width. The illuminance graph may be displayed in the monitoring part (170) for each position information of the conveying roll (132).

The control part (160) may acquire a first illuminance value (V1) and a second illuminance value (V2) lower than the first illuminance value (V1) from the illuminance graph generated based on the illuminance information.

Here, referring to Figures 7 and 8, the first illuminance value (V1) may be an illuminance value measured in a state where all the plurality of holes (134) arranged on the surface of the conveying roll (132) are opened. The first illuminance value (V1) may be an average of illuminance values of light quantities transmitting the holes (134) in a part where there is no foreign substance (S).

Then, referring to Figure 8, the second illuminance value (V2) may be an illuminance value measured in a state where a part of or all the holes (134) are blocked by foreign substances. The second illuminance value (V2) may be an average of illuminance values of light quantities transmitting the holes (134) in a part where there are foreign substances (S). The second illuminance value (V2) may vary depending on the thickness of the foreign substances (S) blocking the holes (134).

The control part (160) may inspect the contamination level for each of the conveying rolls (132) through the illuminance ratio of the second illuminance value (V2) to the first illuminance value (V1).

For example, the control part (160) may inspect the contamination level of the first conveying roll (132a) based on the first illuminance information of the first illuminance sensor (141a) built into the first conveying roll (132a). In addition, the control part (160) may inspect the contamination level of the third conveying roll (132c) based on the third illuminance information of the third illuminance sensor (141c) built into the third conveying roll (132c).

The control part (160) may calculate a location of the foreign substance (S) of the conveying roll (132) through the illuminance graph according to the change in the roll width of the conveying roll (132). In addition, the control part (160) may calculate an area of the foreign substance (S) of the conveying roll (132) through the illuminance graph according to the change in the roll width of the conveying roll (132) and the circumference of the conveying roll (132).

For example, when the first illuminance value (V1) is assumed to be 100, the control part (160) may extract an illuminance reduction section (D, see Figure 8) in which the illuminance value decreases below the first illuminance value (V1) in the illuminance graph. The second illuminance value (V2) may be an average illuminance value of the illuminance reduction section (D, see Figure 8).

The control part (160) may calculate the contamination location and contamination area of the conveying roll (132) through the illuminance reduction section (D, see Figure 8(a)) of the illuminance graph.

The control part (160) has a cleaning contamination level set in advance. The cleaning contamination level is a contamination level in a degree that cleaning of the conveying roll (132) is required. The cleaning contamination level is not contamination due to the less-dried slurry, but a contamination level generated as dust generated during the operation of the electrode base material manufacturing facility (100) is accumulated on the surface of the conveying roll (132). The cleaning contamination level is a contamination value of the conveying roll (132) to the extent that the coating layer (12) of the electrode base material (10) is not damaged.

The cleaning contamination level is an illuminance ratio in a range of 0.5 to 0.8. For example, if the relative value of the second illuminance value (V2) to the first illuminance value (V1) in the illuminance graph of the first conveying roll (132a) is acquired as 70, the illuminance ratio of the first conveying roll (132a) is 0.7.

This is the case where a transmission amount transmitted into the internal space (136) through the holes (134) of the first conveying roll (132a) is reduced by 30%. The foreign substances (S) present on the surface of the first conveying roll (132a) do not damage the coating layer of the electrode base material (10) upon traveling of the electrode base material (10), but block the holes (134) due to dust, whereby they may become a hindrance factor that reduces a sensing sensitivity of the first illuminance sensor (141a).

The control part (160) may provide the monitoring part (170) with a cleaning alarm if the illuminance ratio corresponds to a cleaning contamination level in the range of 0.5 to 0.8. If the illuminance ratio is 0.5 or more, the control part (160) may operate the conveying part (130) and the drying part (120).

The facility manager can recognize a cleaning time point of the conveying roll (132) through the cleaning alarm. The facility manager can manually clean the contaminated conveying roll (132) during operation of the conveying part (130). The facility manager can facilitate maintenances of the electrode base material manufacturing facility (100).

In the control part (160), a stop contamination level is preset. The stop contamination level is contamination due to the less-dried slurry (S) of the coating layer (12) in the electrode base material (10). The stop contamination level is contamination to the extent of damaging the coating layer (12) of the electrode base material (10).

The stop contamination level may have an illuminance ratio of less than 0.5.

For example, if the relative value of the second illuminance value (V2) to the first illuminance value (V1) in the illuminance graph of the first conveying roll (132a) is acquired as 45, the illuminance ratio of the first conveying roll (132a) is 0.45. This is the case where a transmission amount transmitted into the internal space (136) through the holes (134) of the first conveying roll (132a) is reduced by 55%.

In addition, when the foreign substances (S) due to the slurry completely block the holes (134), the illuminance value of the relevant part may be 0. As described above, the foreign substances (S) due to the slurry may scratch the coating layer (12) of the electrode base material (10) during traveling.

The control part (160) may stop the conveying part (130) if the illuminance ratio corresponds to a stop contamination level of less than 0.5. In addition, the control part (160) may provide the monitoring part (170) with a stop alarm if the illuminance ratio corresponds to a stop contamination level of less than 0.5.

In addition, if the illuminance ratio corresponds to a stop contamination level of less than 0.5, the control part (160) may determine for the coating layer of the electrode base material (10) to be dry-defective, and stop the drying part (120). Furthermore, the control part (160) may restart the drying part (120) with the reset drying conditions.

The control part (160) may calculate a traveling distance of the electrode base material (10) penetrating the conveying roll (132) contaminated with foreign substances (S) in consideration of a traveling speed and a deceleration speed of the conveying part (130).

The conventional electrode manufacturing facility did not have an automatic stop function due to foreign substances (S) on the conveying roll (132), so that a worker visually found the foreign substances (S) on the conveying roll (132), and then pressed a stop button of the conveying part (130) to stop the operation of the conveying part (130). While the electrode base material (10) travels the conveying roll (132) to which the foreign substances (S) are attached, the coating layer (12) may be scratched and damaged.

Conventionally, for the time between the time point when the worker has found the foreign substances (S) in the conveying roll (132) and the time point when the worker has stopped operation of the conveying part (130), the electrode base material (10) is traveled at a preset traveling speed, whereby the traveling distance of the electrode base material (10) with the damaged coating layer (12) is also increased.

As compared to the conventional electrode manufacturing facility, the electrode base material manufacturing facility (100) automatically stops the conveying part (130) if the contamination level of the conveying roll (132) corresponds to the stop contamination level, and thus shortens a reaction time until a stop time point when a stop button of the conveying part (130) is pressed after the foreign substance (S) is found in the conveying roll (132), whereby the damaged traveling distance of the electrode base material (10) can be shortened. As a result, the wastage of the electrode base material (10) can be minimized.

After the stop of the conveying part (130), the worker can perform a cleaning operation to remove the foreign substances (S) from the conveying roll (132) according to the contamination level of the conveying roll (132) or replace the contaminated conveying roll (132) with a new conveying roll (132).

In addition, the control part (160) can automatically stop the drying part (120) at the same time as the stop alarm. The control part (160) can restart the drying part (120) according to the reset drying conditions based on the illuminance ratio after the stop of the drying part (120), thereby improving the facility operation efficiency of the electrode base material manufacturing facility (100).

Hereinafter, an electrode base material manufacturing method using the electrode base material manufacturing facility having such a structure will be described.

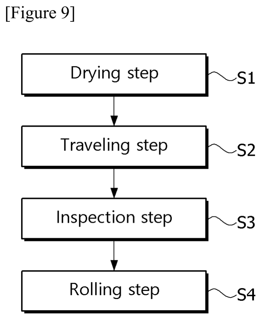

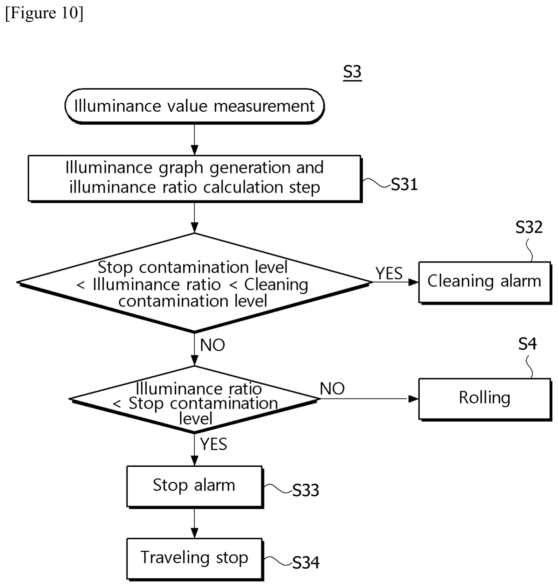

Figures 9 and 10 schematically illustrate flow charts of an electrode base material manufacturing method according to one example of the present invention.

Referring to Figure 9, the electrode base material manufacturing method may comprise a traveling step (S2) in which an electrode base material (10) penetrating a drying part (120) is traveled toward a rolling part (150) along a conveying roll (132) of a conveying part (130), and an inspection step (S3) in which a contamination level of the conveying roll (132) is inspected based on illuminance information acquired through an illuminance sensor (141) built into the conveying roll (132) in the traveling step (S2).

The electrode base material manufacturing method comprises a drying step (S1), a traveling step (S2), an inspection step (S3), and a rolling step (S4).

The drying step (S1) is a process of providing a base material (11), to which the slurry is applied, with heat (Q), to dry moisture of the slurry.

In the drying step (S1), the drying part (120) provides a base material (11), to which the slurry is applied, with heat (Q). A heating temperature of the drying part (120) is set in consideration of components of the slurry, a coating thickness, and the like. The slurry is dried by the heat (Q) of the drying part (120), and adheres to the base material (11) to form a coating layer (12). The coating layer (12) is a layer obtained by solidifying the slurry.

It is preferable that the heat (Q) is evenly provided along the width direction (W) and the length direction of the base material (11). However, if the heat (Q) of the drying part (120) is not evenly provided along the width direction (W) and the length direction of the base material (11), the slurry may be partially dried.

The traveling step (S2) is a process of naturally cooling the electrode base material (10) heated to a predetermined temperature in the drying part (120).

In the traveling step (S2), the electrode base material (10) penetrating the drying part (120) may be naturally cooled while traveling through the conveying section of the conveying section (130).

If there is a less-dried portion in the coating layer (12) of the electrode base material (10) penetrating the drying part (120), the less-dried portion of the coating layer (12) may be attached to the conveying roll (132) installed in a contact area (A1, A2) of the conveying section.

In the coating layer (12), the completely dried portion is solidified to have no viscosity. On the other hand, in the coating layer (12), the less-dried portion has a predetermined viscosity in an intermediate form between liquid and solid. The larger the area of the less-dried portion of the coating layer (12), the larger the area of the foreign substances (S) attached to the surface of the conveying roll (132).

A plurality of contact areas (A1, A2) is arranged in the conveying section. For example, if the drying environment of the drying part (120) is poor, the foreign substance (S) is likely to be found as a foreign substance (S) due to the slurry in conveying rolls (132) disposed close to the drying part (120) among conveying rolls (132) installed in the plurality of contact areas (A1, A2).

The inspection step (S3) is performed while the electrode base material (10) is traveled in the conveying section of the conveying part (130). The inspection step (S3) is performed during the traveling step (S2).

Referring to Figure 10, the inspection step (S3) may comprise an illuminance ratio calculation step (S31), a first alarm step (S32), a second alarm step (S33), and a traveling stop step (S34).

In the illuminance ratio calculation step (S31), the control part (160) may acquire a first illuminance value (V1) and a second illuminance value (V2) lower than the first illuminance value (V1) from the illuminance graph generated based on the illuminance information, and calculate an illuminance ratio of the second illuminance value (V2) to the first illuminance value (V1).

In the first alarm step (S32), the control part (160) may provide a monitoring part (170) with a cleaning alarm if the illuminance ratio corresponds to a cleaning contamination level in a range of 0.5 to 0.8.

In the second alarm step (S33), the control part (160) may provide a monitoring part (170) with a stop alarm if the illuminance ratio corresponds to a stop contamination level of less than 0.5.

In the traveling stop step (S34), the control part (160) may stop the conveying part (130) if the illuminance ratio corresponds to a stop contamination level of less than 0.5.

In the traveling stop step (S34), the control part (160) may stop the drying part (120) and reset the drying conditions of the drying part (120).

In the inspection step (S3), when the conveying roll (132) has no contamination, the electrode base material (10) penetrates the conveying part (130) and travels toward the rolling part (150). While the electrode base material (10) penetrates the rolling part (150), the coating layer (12) of the electrode base material (10) is rolled (S4). In order that the rolling step (S4) increases the energy density of the coating layer (12), a pair of mill rolls of the rolling part (150) pressurizes and rolls the electrode base material (10) up and down while the rolls rotate in opposite directions to each other.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to one example of the present invention, through an illuminance sensor built into a conveying roll guiding traveling of an electrode base material penetrating a drying part, an illuminance value transmitted through the conveying roll is measured in real time, whereby it is possible to inspect a contamination level of the conveying roll.

## Claims

1. An electrode base material manufacturing facility comprising:
a conveying part including a conveying roll arranged so that light is transmitted into an internal space through a surface, and arranged to guide traveling of an electrode base material penetrating a drying part;
an illuminance sensor mounted in the internal space of the conveying roll and arranged to sense illuminance of light transmitted into the internal space; and
a control part arranged to inspect a contamination level of the conveying roll based on the illuminance information sensed by the illuminance sensor and to stop the conveying part if the contamination level corresponds to a preset stop contamination level.

2. The electrode base material manufacturing facility according to claim 1, wherein
the conveying roll comprises a roll body having a plurality of holes into which light is transmitted and a roll axis arranged to be rotatable together with the roll body.

3. The electrode base material manufacturing facility according to claim 2, **characterized in that**
the illuminance sensor is mounted on the outer surface of the roll axis to face the holes in the internal space of the roll body.

4. The electrode base material manufacturing facility according to claim 3, **characterized in that**
the holes are arranged in the entire region of the roll body.

5. The electrode base material manufacturing facility according to claim 4, **characterized in that**
the illuminance sensor is mounted on the roll axis to face the entire region where the holes are arranged, and senses illuminance according to a change in the roll width of the conveying roll in the entire region of the roll body.

6. The electrode base material manufacturing facility according to claim 3, wherein
the holes are arranged in a partial region of the roll body along the width direction of the conveying roll.

7. The electrode base material manufacturing facility according to claim 6, **characterized in that**
the illuminance sensor is mounted on the roll axis to face the partial region where the holes are arranged, and senses illuminance according to a change in the roll width of the conveying roll in a partial region of the roll body.

8. The electrode base material manufacturing facility according to claim 1, further comprising
an illumination arranged to irradiate the conveying roll with light in the conveying section of the conveying part.

9. The electrode base material manufacturing facility according to claim 1, further comprising
a monitoring part where an illuminance graph generated based on the acquired illuminance information is displayed, wherein
the illuminance graph comprises at least one of an illuminance graph according to a change in time and an illuminance graph according to a change in roll width.

10. The electrode base material manufacturing facility according to claim 9, **characterized in that**
the control part acquires a first illuminance value and a second illuminance value lower than the first illuminance value from the illuminance graph generated based on the illuminance information, and inspects a contamination level of the conveying roll through an illuminance ratio of the second illuminance value to the first illuminance value.

11. The electrode base material manufacturing facility according to claim 10, **characterized in that**
the first illuminance value is an illuminance value measured in a state where all the plurality of holes arranged on the surface of the conveying roll are opened, and the second illuminance value is an illuminance value measured in a state where some of or all the holes are blocked by foreign substances.

12. The electrode base material manufacturing facility according to claim 10, **characterized in that**
the control part provides the monitoring part with a cleaning alarm if the illuminance ratio corresponds to a cleaning contamination level in a range of 0.5 to 0.8.

13. The electrode base material manufacturing facility according to claim 10, **characterized in that**
the control part stops the conveying part if the illuminance ratio corresponds to a stop contamination level of less than 0.5.

14. The electrode base material manufacturing facility according to claim 10, **characterized in that**
the control part determines that the coating layer of the electrode base material is poorly dried if the illuminance ratio corresponds to a stop contamination level of less than 0.5, stop the drying part, and reset drying conditions of the drying part.

15. The electrode base material manufacturing facility according to claim 10, **characterized in that**
the control part calculates contamination locations of the conveying roll through the illuminance graph according to the change in the roll width of the conveying roll.

16. The electrode base material manufacturing facility according to claim 10, **characterized in that**
the control part calculates a contamination area of the conveying roll through the illuminance graph.

17. An electrode base material manufacturing method comprising:
a traveling step in which an electrode base material penetrating a drying part is traveled toward a rolling part along a conveying roll of a conveying part; and
an inspection step in which a contamination level of the conveying roll is inspected based on illuminance information acquired through an illuminance sensor built into the conveying roll in the traveling step.

18. The electrode base material manufacturing method according to claim 17, wherein
the inspection step comprises an illuminance ratio calculation step of acquiring a first illuminance value and a second illuminance value lower than the first illuminance value from an illuminance graph generated based on the illuminance information, and calculating an illuminance ratio of the second illuminance value to the first illuminance value.

19. The electrode base material manufacturing method according to claim 18, wherein
the inspection step further comprises a first alarm step of providing a cleaning alarm if the illuminance ratio corresponds to a cleaning contamination level in a range of 0.5 to 0.8.

20. The electrode base material manufacturing method according to claim 18, wherein
the inspection step further comprises a second alarm step of providing a stop alarm if the illuminance ratio corresponds to a stop contamination level of less than 0.5.
